# EUROPEAN PATENT APPLICATION

(11) **EP 2 159 091 A2**
(43) Date of publication of application: **03.03.2010**
(21) Application number: 09169058.6
(22) Date of filing: 31.08.2009
(51) Int. Cl.: B60K 6/48, B60W 20/00, B60W 30/18, B60K 6/365, B60W 10/06, B60W 10/08

(54) **Automatic throttle response for a hybrid vehicle**

(30) Priority: 29.08.2008 US 202138
(71) Applicant: PACCAR INC, Bellevue, WA 98804 (US)
(72) Inventor: Kahn, William C., Corinth, TX 76210 (US); Marshall, Glen A., Denven, Iowa 50622 (US)
(74) Representative: Körber, Martin Hans

(57) **Abstract**

The present disclosure provides a method for controlling a hybrid vehicle having an engine (26), an electric motor (28), an energy storage device (38) having a state of charge, and a throttle (76). The method improves fuel economy of the hybrid vehicle by determining the state of charge of the energy storage device (38) and setting a throttle depression level for transitioning the engine (26) from an engine-off state to an engine-on state based on the state of charge of the energy storage device (38). The present disclosure further provides a hybrid vehicle having an engine (26), an electric motor (28), an energy storage device (38) having a state of charge, and a throttle (78). The hybrid vehicle includes a controlling component for determining the state of charge of the energy storage device (38) and setting a throttle depression level for transitioning the engine (26) from an engine-off state to an engine-on state based on the state of charge of the energy storage device (38).

## Description

### BACKGROUND

The increasing demand to improve fuel economy, eliminate emissions, and reduce noise levels has driven the automotive market to develop a variety of propulsion mechanisms. As an alternative to the traditional internal combustion engine (ICE) powertrain, the industry has developed a hybrid electric system powered by an electric traction motor(s) and an internal combustion engine. During varying driving conditions, hybrid electric vehicles (HEVs) will alternate between the separate power sources, depending on the most efficient manner of operation of each source. For instance, the HEV may alternate between an ICE and an electric motor to power the vehicle. To maximize fuel economy, it is desirous to power the vehicle with the electric motor as often as possible.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

The present disclosure provides a method for controlling a hybrid vehicle having an engine, an electric motor, an energy storage device having a state of charge, and a throttle. The method improves fuel economy of the hybrid vehicle by determining the state of charge of the energy storage device and setting a throttle depression level for engaging the engine based on the state of charge of the energy storage device.

The present disclosure further provides a hybrid vehicle having an engine, an electric motor, an energy storage device having a state of charge, and a throttle. The hybrid vehicle includes a controlling component for determining the state of charge of the energy storage device and setting a throttle depression level for engaging the engine based on the state of charge of the energy storage device.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a partial schematic diagram of one embodiment of a throttle response system formed in accordance with aspects of the present invention;
FIGURE 2 is a schematic diagram of one suitable vehicle in which the throttle response system of FIGURE 1 may be employed;
FIGURE 3 is a graphical depiction of the relationship between the throttle depression level of a vehicle and the state of charge of the vehicle energy storage device, wherein the relationship is controlled by the throttle response system of FIGURE 1.

### DETAILED DESCRIPTION

Embodiments of the present invention will now be described with reference to the drawings where like numerals correspond to like elements. Embodiments of the present invention are generally directed to throttle response systems suitable for use in vehicles, such as Class 8 trucks. More particularly, embodiments of the present invention are directed to throttle response systems suitable for use with vehicles of the hybrid type (e.g., gas-electric, diesel-electric, etc.). The throttle response system increases fuel economy of the hybrid vehicle by maximizing use of the vehicle energy storage device.

Although exemplary embodiments of the present invention will be described hereinafter with reference to a hybrid powered heavy duty truck, it will be appreciated that aspects of the present invention have wide application, and therefore, may be suitable for use with many other types of vehicles, including but not limited to light & medium duty vehicles, passenger vehicles, motor homes, buses, commercial vehicles, marine vessels, etc., that are hybrid powered. Accordingly, the following descriptions and illustrations herein should be considered illustrative in nature, and thus, not limiting the scope of the present invention, as claimed.

Prior to discussing the details of various aspects of the present invention, it should be understood that the following description includes sections that are presented largely in terms of logic and operations that may be performed by conventional electronic components. These electronic components, which may be grouped in a single location or distributed over a wide area, can generally include processors, memory, storage devices, input/output circuitry, etc. It will be appreciated by one skilled in the art that the logic described herein may be implemented in a variety of configurations, including but not limited to, analog circuitry, digital circuitry, processing units, etc., and combinations thereof. In circumstances were the components are distributed, the components are accessible to each other via communication links.

In the following description, numerous specific details are set forth in order to provide a thorough understanding of exemplary embodiments of the present invention. It will be apparent to one skilled in the art, however, that many embodiments of the present invention may be practiced without some or all of the specific details. In some instances, well-known process steps have not been described in detail in order not to unnecessarily obscure various aspects of the present invention.

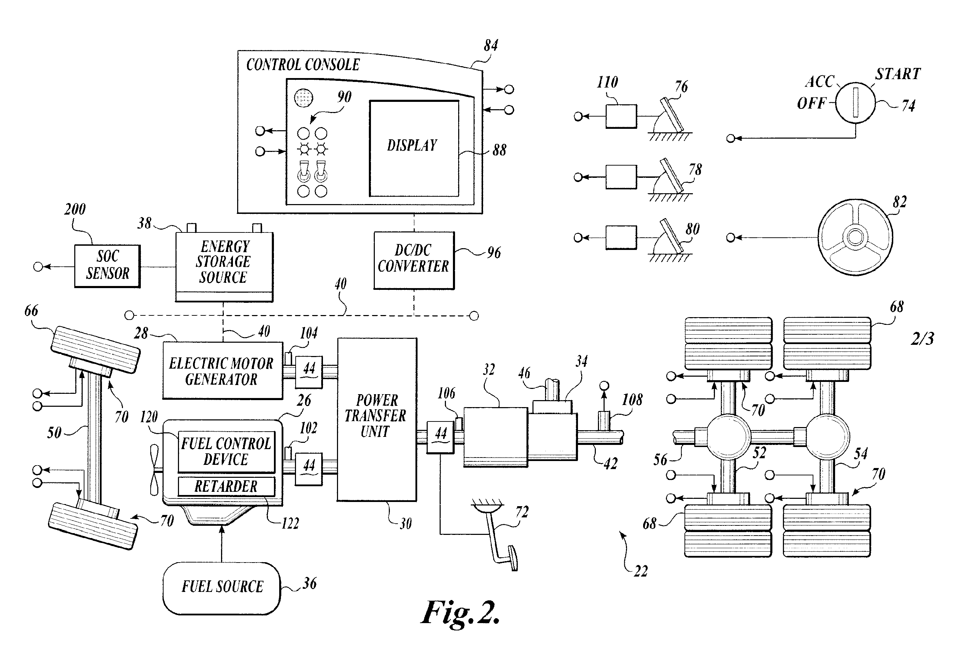

As briefly described above, embodiments of the present invention are directed to throttle response systems suitable for use in a vehicle. One suitable vehicle in which the throttle response systems may be employed will now be described in more detail with reference to FIGURE 2. Turning now to FIGURE 2, there is shown a vehicle 20, such as a Class 8 tractor, having one suitable embodiment of a parallel hybrid powertrain 22. The vehicle 20 depicted in FIGURE 2 represents one of the possible applications for the systems and methods of the present invention. It should be appreciated that aspects of the present invention transcend any particular type of land or marine vehicle employing a hybrid powertrain. Moreover, the hybrid powertrain 22 depicted in FIGURE 2 has a parallel configuration, although hybrid powertrains with series configurations, or combined hybrid configurations (i.e., hybrids that operate in some manner as a parallel hybrid and a serial hybrid) may also be employed.

One of ordinary skill in the art will appreciate that the hybrid powertrain 22 and associated subsystems/components may include many more components than those depicted in FIGURE 2. For the sake of brevity, these additional components have not been described herein. However, it is not necessary that all of these generally conventional components be shown or described in order to disclose an illustrative embodiment for practicing the present invention, as claimed.

In the embodiment shown in FIGURE 2, the hybrid powertrain 22 includes an internal combustion engine 26, an electric motor/generator 28, a power transfer unit 30, and a transmission 32. The hybrid powertrain 22 also includes a fuel tank 36 or the like that stores any suitable combustive fuel, such as gasoline, diesel, natural gas, alcohol, etc. In use, the internal combustion engine 26 receives fuel from the fuel tank 36 and converts the energy of the fuel into output torque. The powertrain 22 further comprises an energy storage device 38 in the form of a high voltage battery, a bank of batteries, or a capacitor. Alternatively, a device such as a fuel cell may be used in conjunction with a battery and/or capacitor to provide a source of electrical power for the powertrain 22. In use, the electric motor generator 28 can receive electrical energy from the energy storage device 38 via a high voltage DC bus 40 and converts the electrical energy into output torque. The electric motor generator 38 can also operate as a generator for generating electrical energy to be stored in the energy storage device 38.

Still referring to FIGURE 2, the power transfer unit 30 operatively interconnects the internal combustion engine 26, the electric motor/generator 28, and the transmission 32. The transmission 32 may be a manual transmission, an automated manual transmission, or an automatic transmission that includes multiple forward gears and a reverse gear operatively connected to an output shaft 42. The power transfer unit 30 is configured for selectively switching between multiple vehicle operating states or "modes," which include but are not limited to: 1) a state where only the output torque of the engine 26 is transmitted through the transmission 32 to the output shaft 42; 2) a state where only the output torque generated by the electric motor 28 is transferred through the transmission 32 to the output shaft 42; 3) a state where the output torque of the internal combustion engine 26 and the electric motor generator 28 is combined and transferred through the transmission 32 to the output shaft 42; 4) a state where the internal combustion engine 26 transmits output torque to the output shaft 42 through the transmission 32 and transmits output torque to the electric motor generator 28 so that the electric motor generator 28 acts as a generator for generating electrical energy to charge the energy storage device 38; and 5) a regenerative braking state where the internal combustion engine 26 is decoupled from the power transfer unit, and the input torque generated by the rear wheels is transmitted through the transmission 32 to the power transfer unit, which transmits this input torque to the electric motor generator 28 so that the electric motor generator 28 acts as a generator for generating electrical energy to charge the energy storage device 38.

One or more clutch assemblies 44 may be positioned between the internal combustion engine 26 and the electric motor generator 28 and the power transfer unit 30 and/or the transmission 32 to selectively engage/disengage the internal combustion engine 26 and/or the electric motor generator 28 from the power transfer unit 30 and the transmission 32. The one or more clutch assemblies 44 may be part of the power transfer unit 30 or may be discrete therefrom. In one embodiment, the power transfer unit 30 may include a planetary gear set conventionally arranged for carrying out the functions 1-4 described above. Of course, other types of power transfer units, including other gear sets and transmissions, may be employed. In another embodiment, the power transfer unit 30 and the transmission 32 may be arranged as a unitary device that provides both the functions of the power transfer unit 30 and that of the transmission 32. One type of unitary device that may be employed by the powertrain 22 is known in the art as a power split device.

The vehicle 20 also includes at least two axles such as a steer axle 50 and at least one drive axle, such as axles 52 and 54. The output shaft 42 of the transmission 32, which may include a vehicle drive shaft 56, is drivingly coupled to the drive axles 52 and 54 for transmitting the output torque generated by the internal combustion engine 26 and/or the electric motor generator 28 to the drive axles 52 and 54. The steer axle 50 supports corresponding front wheels 66 and the drive axles 52 and 54 support corresponding rear wheels 68, each of the wheels having service brake components 70. The service brake components 70 may include wheel speed sensors, electronically controlled pressure valves, and the like, to effect control of the vehicle braking system.

The vehicle 20 may also include conventional operator control inputs, such as a clutch pedal 72 (in some manual systems), an ignition or start switch 74, a throttle, or an accelerator pedal 76, a service brake pedal 78, a parking brake 80 and a steering wheel 82 to effect turning of the front wheels 66 of the vehicle 20. The vehicle 20 may further include a cab mounted operator interface, such as a control console 84, which may include any of a number of output devices 88, such as lights, graphical displays, speakers, gages, and the like, and various input devices 90, such as toggle switches, push button switches, potentiometers, or the like. To provide power to the control console, a DC/DC converter 96 is connected to the high voltage bus 40. The DC/DC converter 96 reduces the voltage it receives, and outputs power at this lower voltage to the control console. The D/C to D/C converter can output power to other low voltage electrical devices on the vehicle 20. The DC/DC converter may also condition the power prior to directing it to the low voltage electrical devices.

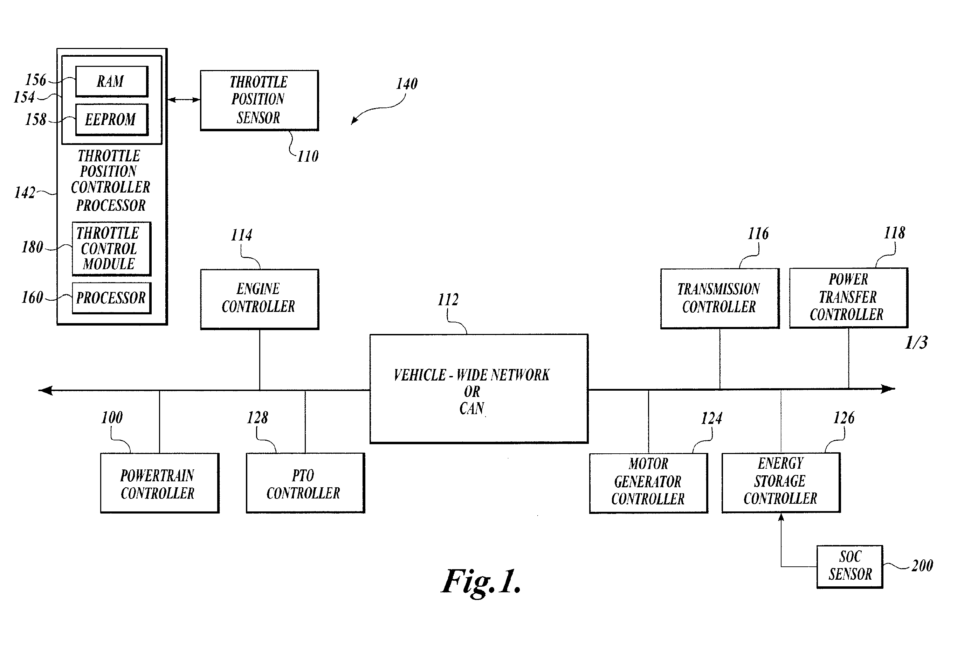

To control the various aspects of the hybrid powertrain 22, a powertrain controller 100 is provided. Referring to FIGURE 1, the powertrain controller 100 can be a dedicated controller for the hybrid powertrain 22 or can be incorporated in another general vehicle controller, such as a vehicle system controller (VSC). Although the powertrain controller 100 is shown as a single controller, it may include multiple controllers or may include multiple software components or modules embedded in a single controller. For example, the powertrain controller 100 could be a separate hardware device, or may include a separate powertrain control module (PCM), which could be software embedded within general purpose controller, such as a VSC.

In one embodiment, the powertrain controller 100 may control the operation of one or more of the following devices: the internal combustion engine 26; the electric motor generator 28; the power transfer unit 30; the transmission 32; the energy storage device 38, optional clutch assemblies 42, etc. In one embodiment, the powertrain controller 100 may include a programmable digital computer, microprocessor or the like that is configured to receive various input signals, including without limitation, the operating speeds of internal combustion engine 26 via sensor 102 and the electric motor generator 28 via sensor 104, transmission input speed via sensor 106, selected transmission ratio, transmission output speed via sensor 108 and vehicle speed via wheel speed sensors (not shown), throttle position via throttle position sensor 110, and state of charge (SOC) of the energy storage device 38 via SOC sensor 200.

The powertrain controller 100 processes these signals and others accordingly to logic rules to control the operation of the hybrid powertrain 22. For example, to start the internal combustion engine 26, the powertrain controller 100 may be programmed to signal delivery of fuel to the internal combustion engine 26 and to signal the operation of the electric motor generator 28 or optional starter to start the engine. It will be appreciated that the powertrain controller 100 may receive these input signals directly from the associated sensor(s), devices, etc., or may receive the input signals from other vehicle subsystems, as will be described in more detail below.

To support this control, various devices (e.g., the internal combustion engine 26, the electric motor generator 28, etc.) controlled by the powertrain controller 100 may include their own controllers, which communicate with the powertrain controller 100 through a vehicle-wide network, also referred to as a controller area network (CAN) 112, as shown in FIGURE 1. Those skilled in the art and others will recognize that the CAN 112 may be implemented using any number of different communication protocols such as, but not limited to, Society of Automotive Engineer's ("SAE") J1587, SAE J1922, SAE J1939, SAE J1708, and combinations thereof. Alternatively, the aforementioned controllers may be software control modules contained within the powertrain controller 100 or other general purpose controllers residing on the vehicle. It will be appreciated, however, that the present invention is not limited to any particular type or configuration of powertrain controller 100, or to any specific control logic for governing operation of the hybrid powertrain 22.

For example, an engine controller 114 may communicate with the powertrain controller 100 and may function to monitor and control various aspects of the operation of the internal combustion engine 26, including ignition timing (on some vehicles), fuel delivery, variable valve timing (if equipped) and the like. To that end, the engine controller 114 typically receives signals from a variety of sensors, including but not limited to the wheel speed sensors (not shown) of the brake components 70, the engine speed sensor 102, the throttle position sensor 110, etc., either directly or by other system or device controllers (i.e., transmission controller 116, powertrain controller 100, throttle position controller, etc.), processes such signals and others, and transmits a variety of control signals to devices including but not limited to fuel control devices 120 for selectively supplying fuel to the internal combustion engine 26, an engine retarder 122, such as a jake brake, etc. As will be described in more detail below, the engine controller 114 may transmit signals indicative of vehicle operational data (e.g., engine speed, throttle position, etc.) to the powertrain controller 100 or other system controllers via the CAN 112 and may receive control signals from the powertrain controller 100 or from controllers of other vehicle subsystems either directly or via CAN 112 to effect the operation of the internal combustion engine 26.

Similarly, the energy storage device 38 may have a controller 126 that may communicate with the powertrain controller 100 and may function to monitor and control various aspects of the operation of the energy storage device 38. To that end, the controller 126 sends and receives signals to and from the powertrain controller 100 and the energy storage device 38. For example, the controller may receive signals from a variety of sensors including an SOC sensor 200, such as voltage data, current data, charge and discharge data (e.g., in amp hours), temperature data, and/or other state of charge (SOC) determination data, etc., and appropriately process such signals. It should be appreciated that the SOC may be determined from input signals supplied by any of the various vehicle devices, sensors, controllers, etc., in any suitable manner well known in the art. In one embodiment, the controller 126 continuously determines the SOC of the energy storage device 38 via SOC sensor 200. In another embodiment, the controller 126 determines the SOC of the energy storage device 38 upon control signals sent by the powertrain controller 100. In another embodiment, the controller 126 sends the processed signals to the powertrain controller 100, where they are processed to determine, for example, the SOC of the energy storage device 38.

In addition, the throttle, or accelerator pedal 76 may include a throttle position controller 142 that communicates with the powertrain controller 100, the engine controller 114, etc., and may function to monitor and control various aspects of the operation of the engine 26 and electric motor generator 28 through the depression of the accelerator pedal 76. To that end, the throttle position controller 142 may send and receive signals to and from the throttle position sensor 110, the powertrain controller 100, and the engine controller 114, and appropriately process such signals, as will be described in greater detail below.

The electric motor generator 28 may also include one or more controllers 130 that sends and receives signals to and from the powertrain controller 100 and the electric motor generator 28 for controlling the direction of power flow to/from the electric motor generator 28. The vehicle may include other controllers, control units, program modules, etc., such as a control console controller (not shown), as well known in the art, communicatively connected to the CAN 112.

As used herein, controllers, control units, control modules, program modules, etc., can contain logic for carrying out general or specific operational features of the vehicle 20. The logic can be implemented in hardware components, such as analog circuitry, digital circuitry, processing units, or combinations thereof, or software components having instructions which can be processed by the processing units, etc. Therefore, as used herein, the term "controlling component" can be used to generally describe these aforementioned components, and can be either hardware or software, or combinations thereof, that implement logic for carrying out various aspects of the present invention.

Referring now to FIGURES 1 and 2, in one embodiment of the present invention, the powertrain controller 100, either alone or in conjunction with other controllers can control the operation of the vehicle 20 in the following manner. It will be appreciated that the vehicle can be controlled to operate in any number of ways or modes. Additionally, it should be appreciated that the following description of the operation of the vehicle in accordance to one embodiment relates to a parallel hybrid vehicle, and that the operation of vehicles with serial hybrid powertrains, combined hybrid powertrains, or power assist hybrids may be slightly different, but within the skill of those skilled in the art.

When it is desired to start the hybrid vehicle 20 from rest (i.e., parked), the ignition switch 74 is moved to the start position. Next, the vehicle operator chooses the appropriate gear, releases the parking brake 80, if set, lifts their foot off of the service brake pedal 78, and applies pressure on the accelerator pedal 76. At this time, the powertrain controller 100 monitors various hybrid powertrain operating parameters, for example, the SOC of the energy storage device 38 and the load state of the vehicle 20 (typically calculated by accelerator pedal position and/or vehicle speed), and depending on the SOC of the energy storage device 38 and the load state of the vehicle , the powertrain controller 100 controls the operation of the electric motor generator 28 only ("electric launch mode"), the internal combustion engine only, or combines the output of both via the power transfer unit 30 ("blended torque mode") to provide motive force to the vehicle 20.

For example, if the powertrain controller 100 determines that the SOC of the energy storage device 38 is at a sufficient level with respect to the vehicle load state, the powertrain controller 100 operates the powertrain 22 in the electric launch mode until the vehicle load state changes. To further illustrate, in a low vehicle speed state, the powertrain controller 100 may operate solely in the electric launch mode. In the electric launch mode, the internal combustion engine is off (engine-off condition), and the powertrain controller 100 signals delivery of electrical energy from the energy storage device 38 to power the electric motor generator 28. Upon receipt of electrical power from the energy storage device 38, the electric motor generator 28 acts as a motor to generate output torque for propelling the vehicle 20.

On the other hand, if the powertrain controller 100 determines that the vehicle is operating in a high vehicle load state (i.e. high speed or high acceleration), the powertrain controller 100 operates the powertrain 22 either in the hybrid assist mode, also known as the "blended torque mode," or the engine only mode. In the blended torque mode, the power controller 100 signals delivery of electrical energy from the energy storage device 38 to power the electric motor generator 28 and fuel delivery to the internal combustion engine 26 so as to be started by the electric motor generator 28, and then signals the internal combustion engine 26 and the energy storage device/electric motor generator to generate output torque, which is "blended" or combined by the power transfer unit 30 according to control signals from the powertrain controller 100. For example, in a medium load state where the powertrain controller 100 determines that improved fuel efficiency may be realized by operating in the blended torque mode, or if additional torque in needed from the electric motor generator 28 during, for example, rapid acceleration situations, the internal combustion engine 26, along with the electric motor generator 28 is operated by the powertrain controller 100 so that the generated output torque is combined by the power transfer unit 30 and sent to the drive axles 52 and 54 through the transmission 32.

It should also be appreciated that the vehicle 20 may start out in electric launch mode, but based on continuously monitored operating conditions of the powertrain, e.g., vehicle load, the powertrain controller 100 may determine that the internal combustion engine 26 is needed to meet the output demands of the vehicle 20. In this case, the powertrain controller 100 signals for the internal combustion engine 26 to be started by the electric motor generator 28 or a separate starter motor, and signals the appropriate components, e.g., power transfer unit 30, clutch assemblies 44, etc. to combine the output torque of the internal combustion engine 26 and the electric motor generator 28 for propelling the vehicle 20.

When the hybrid vehicle 20 is cruising (i.e. not accelerating), and the internal combustion engine 26 can meet the vehicle load demand, the powertrain controller 100 controls the operation of the internal combustion engine 26, the electric motor generator 28, and the power transfer unit 28 based on the SOC of the energy storage device 38. If the energy storage device SOC is low, the powertrain controller 100 operates the power transfer unit 30 to split the power from the internal combustion engine 26 between the drive axles 52, 54 and the electric motor generator 28 so that the electric motor generator 28 acts as a generator and charges the energy storage device 38. This is called the "energy storage device charging mode." If the SOC of the energy storage device 38 is high, the powertrain controller 100 may operate the internal combustion engine 26 solely to propel the vehicle, or may operate the power transfer unit 32 and the electric motor generator 28 in the blended torque mode, as described above.

At any time the powertrain controller 100 determines during vehicle operation that the SOC of the energy storage device 38 becomes equal to or lower than a threshold level, the internal combustion engine 26 is immediately driven, and the output torque of the internal combustion engine 26 is transmitted to the electric motor generator 28 through the power transfer device 30. In this case, the electric motor generator 28 is operated as a power generator to charge the energy storage device 38. This may occur during vehicle transport or idling situations as well.

The energy storage device 38 may also be charged during vehicle movement via the regenerative braking mode. That is, instead of using the brakes to slow or stop the vehicle 20, the electric motor generator is used to slow the vehicle 20. At the same time, the energy from the rotating rear wheels is transferred to the electric motor generator 28 via the transmission 32 and power transfer unit 30 (the internal combustion engine 26 is either in the engine-off mode or is decoupled from the power transfer unit 30 by the clutch assembly 44)), which in turn, causes the electric motor generator 28 to act as a generator to charge the energy storage device 38.

Referring now to FIGURE 1, there is shown a schematic view of one embodiment of a throttle response system, generally designated 140, formed in accordance with aspects of the present invention. The throttle response system 140 is suitable for use in a vehicle, such as the hybrid vehicle 20 described above, for providing increased fuel economy to the hybrid vehicle by adjusting the throttle demand, or accelerator pedal depression level required to engage the engine (i.e. turn the engine "on"). As will be described in more detail below, the throttle response system 140 is capable of adjusting the accelerator pedal 76 depression level required to engage the engine as the SOC of the energy storage device 38 changes. As best shown in FIGURE 1, the throttle response system 140 generally includes a throttle position sensor 110 and a throttle position controller 202. However, it should be appreciated that the throttle response system 140 may instead comprise software components or modules embedded within the powertrain controller 100 or within a general purpose controller, such as a VSC, as described above.

The throttle response controller 142 may be connected in electrical communication with, for example, the throttle position sensor 110, the powertrain controller 100, the engine controller 114, and the energy storage controller 126. In operation, as will be described in more detail below, the throttle position controller 142 receives signals from the throttle position sensor 110 and the SOC sensor 200, processes such signals and others, and depending on the processed signals, transmits suitable control signals to the engine controller 114 and/or the powertrain controller 100 for adjusting the throttle depression level required to engage the engine 26.

It will be appreciated that the throttle position sensor 110 and the SOC sensor 200 may output its signals directly to the throttle position controller 142, or may communicate with the throttle position controller 142 via the CAN 112 or via other controllers. For instance, the SOC sensor 200 may output signals to the energy storage controller 126 (or powertrain controller 100 if the energy storage controller 126 is embedded therein), and the energy storage controller 126 may communicate such signals to the throttle position controller 142. Moreover, in one embodiment the engine controller 114 may monitor the throttle position sensor 110 and communicate such information to the throttle position controller 142 via the CAN 112. It will be also appreciated that the throttle position controller 142 may communicate with other electronic components of the vehicle 20 via the CAN 112 for collecting data from other electronic components to be utilized by the throttle position controller 142.

In several embodiments, the throttle position controller 142, and any one of the various sensors, switches, actuators, etc., of the throttle response system 140 may contain logic rules implemented in a variety of combinations of hardware circuitry components and programmed microprocessors to effect control of the various vehicle systems and subsystems described herein. To that end, one suitable embodiment of the throttle position controller 142 may include a memory 154 with a Random Access Memory ("RAM") 156, and an Electronically Erasable, Programmable, Read-Only Memory ("EEPROM") 158, a processor 160, and a throttle control module 180 for providing functionality to the throttle response system 140.

The throttle control module 280 includes executable instructions that adjust the accelerator pedal 76 depression level required to engage the engine 26 as the SOC of the energy storage device 38 changes. More specifically, the throttle control module 280 sends instructions to the engine controller 114 to engage the engine 26 only after the accelerator pedal 76 is depressed a predetermined amount. The depression amount is calculated to correspond with the SOC of the energy storage device 38 communicated to the throttle position controller 142 via the SOC sensor 200. In one embodiment, an increased level of accelerator pedal depression is required if the SOC of the energy storage device is relatively "high," and a decreased level of depression is required if the SOC of the energy storage device is relatively "low."

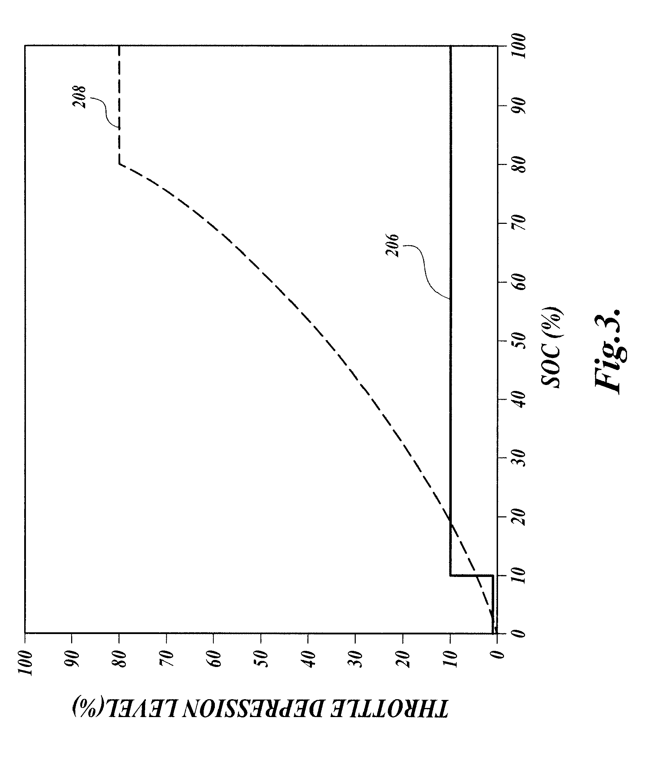

Referring now to FIGURE 3, there is shown an example of a graphical representation of the relationship between the depression level of the accelerator pedal 76 required to engage the engine 26 and the SOC of the energy storage source 38. The relationship is controlled by the throttle response system 140 in accordance with one exemplary embodiment of the present invention. It should be appreciated that the FIGURE 3 is used for exemplary purposes only, and therefore, the present invention is not limited in scope to the relationship depicted. Rather, the throttle response system 140 may be used to define any suitable relationship between the required depression level of the accelerator pedal 76 and the SOC of the energy storage source 38 in order to improve fuel economy of the vehicle and maximize use of the energy storage source 38.

The graph shown in FIGURE 3 includes an X axis that represents the SOC of the energy storage device 38. The SOC is shown as a percentage of the electrical energy capacity remaining in the energy storage device 38, although voltage or other energy storage device parameters may be utilized instead. As shown in FIGURE 3, the SOC ranges between zero percent (0%) and one hundred percent (100%). In one embodiment, the range of SOC (i.e., 0%-100%) corresponds to the total electrical energy capacity of the energy storage device 38. In an alternative embodiment where in the energy storage device is composed of one or more rechargeable batteries, it may be desirable for the throttle position controller 142 or energy storage device controller 126 to limit the usable electrical energy capacity to a subset of the total electrical energy capacity of the energy storage device 38. For example, the throttle position controller 142 or energy storage device controller 126 may set a predetermined maximum SOC level (e.g., 70%-90%, etc., of total charge) of the energy storage device 38 and a predetermined minimum SOC level (e.g., 30%-50%, etc., of total charge) of the energy storage device 38. This may provide the added benefits of increasing the life cycle of the energy storage device 38. As such, in this embodiment , the range of SOC (i.e., 0%-100%) indicated in FIGURE 3 corresponds to the range (e.g., 30-70%, 35-75%, 40-90%, etc.) defined by the maximum and minimum SOC levels of the energy storage device 38 set by, for example, the throttle position controller 142 and/or energy storage device controller 126. It should be appreciated that in representing the SOC level of the energy storage device 38 as a percentage of the electrical stored energy capacity, all known methods of calculating SOC using various measurements and parameters may be employed.

The Y axis represents the throttle depression level, or the depression level of the accelerator pedal 76 required to engage the engine 26 and turn the engine on. The depression level of the accelerator pedal 76 is represented as a percentage of the total range of depression of the accelerator pedal 76 from zero percent (0%) depression to one hundred percent depression (100%).

To better understand the relationship defined by the throttle response system 140, an example of a prior art relationship between the SOC and the required depression level of the accelerator pedal 76 to engage the engine represented by line 206 will now be described. In a prior art hybrid vehicle, when the SOC is low, for instance, between 1% and 10%, the accelerator pedal need only be depressed a small amount, such as 1 %, to engage the engine. The engine must be used to power the vehicle since the energy storage device does not have sufficient stored electrical energy to supply to the electric motor with energy to power the vehicle. However, if the SOC was at a certain level, such as 10%, the engine would not be engaged until the accelerator pedal was depressed a certain amount, such as 10%. Thus, the engine is engaged if the SOC is 10% or higher once the accelerator pedal is depressed 10%.

Engaging the engine at a certain accelerator pedal depression regardless of the SOC uses the engine even when the SOC of the energy storage device is at a sufficient level to continue powering the electric motor. For instance, even if the SOC was at 80%, the engine would be engaged once the accelerator pedal was depressed 10%. Engaging the engine regardless of SOC does not maximize use of the energy storage device and electric motor and is therefore not energy or fuel efficient. Moreover, in order for the driver to maximize use of the energy storage device, the driver must exert careful control of the accelerator pedal such that he or she does not depress the pedal more than 10%.

Now referring to line 208 of FIGURE 3, an exemplary relationship between the SOC and the accelerator pedal depression level required to engage the engine 26 as defined by the throttle response system 140 will now be described. Generally described, the throttle response system 140 alters the accelerator pedal depression level required to engage the engine depending on the SOC of the energy storage device 38. For example, when the SOC is at about 20%, the required accelerator pedal depression level is about 10%. However, when the SOC is at 50%, the required accelerator pedal depression level is about 40%. Moreover, when the SOC is about 80%, the required accelerator pedal depression level is about 80%. As such, the engine is not used when the SOC of the energy storage device is at a sufficient level to power or continue powering the electric motor. However, the engine is engaged when the SOC is too low to power or continue powering the electric motor. Thus, use of the energy storage device is maximized and fuel economy is achieved.

Regardless of SOC, depressing the accelerator pedal 76 beyond an upper throttle depression level, such as 80%, will instantaneously engage the engine. In this manner, if the driver wants to quickly accelerate the vehicle, he or she can depress the accelerator pedal beyond 80% to instantaneously engage the engine and boost vehicle power and acceleration, regardless of SOC.

While illustrative embodiments have been illustrated and described, it will be appreciated that various changes can be made therein without departing from the spirit and scope of the invention.

## Claims

1. A hybrid vehicle, comprising:
(a) an engine having an off-state of operation and an on-state of operation;
(b) an electric motor;
(c) an energy storage device having a state of charge, the energy storage device providing power to the electric motor;
(d) a throttle operating over a range of throttle depression levels, at least one throttle depression level along the range of throttle depression levels being associated with transitioning the engine from the off-state of operation to the on-state of operation; and
(e) a controlling component for determining the state of charge of the energy storage device and, based on the state of charge of the energy storage device, setting the throttle depression level that is associated with transitioning the engine from the off-state of operation to the on-state of operation from the range of throttle depression levels.

2. The vehicle of Claim 1, further comprising a throttle response system having a throttle position sensor and a throttle position controller, wherein the throttle response system determines the state of charge of the energy storage device and sets said throttle depression level that transitions the engine from the off-state of operation to the on-state of operation based on the state of charge of the energy storage device.

3. The vehicle according to Claims 1 or 2, wherein the controlling component includes executable instructions for setting said throttle depression level that transitions the engine from the off-state of operation to the on-state of operation based on the state of charge of the energy storage device.

4. The vehicle according to Claim 2 or 3, wherein the throttle position controller includes memory and a processor.

5. The vehicle according to Claims 2, 3 or 4, wherein the throttle position controller is in electrical communication with an energy storage controller, an engine controller, and the throttle position sensor.

6. The vehicle according to Claim 5, wherein the throttle position controller communicates with the engine controller to transition the engine from the off-state of operation to the on-state of operation at a predetermined throttle depression level.

7. The vehicle according to one of the Claims 2 to 6, wherein the throttle position controller is embedded within a powertrain controller.

8. The vehicle according to one of the Claims 1 to 7, wherein the controlling component receives a state of charge signal from an energy storage controller for determining the state of charge of the energy storage device.

9. The vehicle according to one of the Claims 1 to 8, wherein the controlling component further sets an upper throttle depression level for transitioning the engine from the off-state of operation to the on-state of operation regardless of the state of charge of the energy storage device.

10. The vehicle according to one of the Claims 1 to 9, wherein a controlling component sets an increased throttle depression level for transitioning the engine from the off-state of operation to the on-state of operation if the SOC of the energy storage device is relatively high, and wherein the controlling component sets a decreased throttle depression level for transitioning the engine from the off-state of operation to the on-state of operation if the SOC of the energy storage device is relatively low.

11. A method for controlling a hybrid vehicle having an engine, an electric motor, an energy storage device having a state of charge, and a throttle having a number of throttle depression levels, the method comprising:
(a) determining the state of charge of the energy storage device; and
(b) setting a throttle depression level for transitioning the engine from an engine-off state to an engine-on state based on the state of charge of the energy storage device.

12. The method according to Claim 11, wherein a controlling component determines the state of charge of the energy storage device and sets the throttle depression level for transitioning the engine from an engine-off state to an engine-on state based on the state of charge of the energy storage device.

13. The method according to Claim 12, wherein a throttle response system having a throttle position sensor and a throttle position controller determines the state of charge of the energy storage device and sets the throttle depression level for transitioning the engine from an engine-off state to an engine-on state based on the state of charge of the energy storage device.

14. The method according to Claims 11 or 12, wherein the controlling component includes executable instructions for setting the throttle depression level for transitioning the engine from an engine-off state to an engine-on state based on the state of charge of the energy storage device.

15. The method according to Claim 13, wherein the throttle position controller is in electrical communication with an energy storage controller, an engine controller, and the throttle position sensor.

16. The method according to Claim 15, wherein the throttle position controller communicates with the engine controller to engage the engine at a predetermined throttle depression level.

17. The method according to Claim 13, wherein the throttle position controller is embedded within a powertrain controller.

18. The method according to one of the Claims 12 to 17, wherein the controlling component receives a state of charge signal from an energy storage controller for determining the state of charge of the energy storage device.

19. The method according to one of the Claims 11 to 18, further comprising:
setting an upper throttle depression level for transitioning the engine from an engine-off state to an engine-on state regardless of the state of charge of the energy storage device.

20. The method according to one of the Claims 11 to 19, wherein a controlling component sets an increased throttle depression level for transitioning the engine from an engine-off state to an engine-on state if the SOC of the energy storage device is relatively high, and wherein the controlling component sets a decreased throttle depression level for transitioning the engine from an engine-off state to an engine-on state if the SOC of the energy storage device is relatively low.
